# EUROPEAN PATENT SPECIFICATION

(11) **EP 3 884 918 B1**
(45) Date of publication and mention of the grant of the patent: **30.08.2023**
(21) Application number: 20186172.1
(22) Date of filing: 16.07.2020
(51) Int. Cl.: A61G 5/10

(54) **CLAMPING ELEMENT**
KLEMMELEMENT
ÉLÉMENT DE SERRAGE

(30) Priority: 23.03.2020 CZ 20203735
(43) Date of publication of application: 29.09.2021
(73) Proprietor: AnyoneGo, s.r.o., 60200 Brno (CZ)
(72) Inventor: Jiránek, Jan, 39175 Be ice (CZ)
(74) Representative: Sedlák, Jirí

(56) References cited:
- EP-A1- 0 697 300
- EP-A1- 2 860 046
- WO-A1-2014/122404

## Description

### Field of the Invention

The invention relates to a clamping element intended for simple and fast clamping of a wheel on a wheel axis. The solution is intended primarily for use in non-motorized and low-speed motor carts, which require removable wheel bases, such as wheelchairs, prams and other similar transport and transportation equipment.

### Background of the Invention

A separate wheel hub or a complex clamping mechanism consisting of a hub and a shaft sleeve is a major part of all wheels designed to ensure the rotational movement of the wheel while firmly clamping the hub in the carrier or frame. In this respect, the wheel hub generally consists of a fixed part and a rotating part, which are connected to each other into a detachable or non-detachable unit.

The two basic types are hubs with a rotating sleeve and a hub with a fixed sleeve, the so-called hub with side guide. A typical hub with a rotating sleeve is a hub for bicycles, motorcycles, carts or prams. Here, the shaft is clamped in a frame or fork, and at the same time the shaft is fitted with bearings, on which the outer rotating sleeve, forming part of a fixed or split rim, rolls. A typical hub with a fixed sleeve is a wheel hub in cars, where the end of the axle is formed by a fixed sleeve, in which a rotating shaft is mounted fitted with a disc or drum on which the wheel disc is mounted.

An important aspect in the design of wheel hubs is also the system of clamping this hub, which affects the speed and ease of replacement or simple removal of the wheel from the hub or frame.

Document CZ 97773 discloses a system for quick clamping of a wheel hub, suitable especially for bicycles. The system is based on the principle of one-sided lever anchoring using a clamping lever. In the basic rest position of the clamping lever, the pin or carrier is engaged in a continuous groove, and by turning the clamping lever it is possible to clamp or release the fork arm between the end nut and the spacer nut. Clamping is so fast, it requires no additional tools, as the function of the spanner is performed by the clamping lever itself. The strength of the clamping system is high, based on the conventional screw thread system and resistant to spontaneous release. The movement of the clamping lever is in the direction and against the direction of rotation of the wheel. The disadvantage of this solution is that despite the presence of a short lever, a force may be needed to tighten it over the power of, for example, weaker individuals, because anyway it is tightening the nut on the thread and the lever length is not large, because even in this size projects significantly in a lateral direction above the side profile of the wheel.

Another quick-clamping system for wheel hub is known from document CZ 104534. The document describes a system for quick clamping of a wheel hub on a bicycle fork. The hub sleeve, which is of a commonly known arrangement, is mounted on a shaft with a spacer by means of tapered roller bearings secured against loosening by washers and lock nuts. A fastening nut is screwed on at one end of the mechanism and a clamping mechanism consisting of a head and a lever is at the other end. The hub is fitted with wheel ends between the lock nuts and the head and the fastening nut. The fastening nut adjusts the clamping force, while the head with the lever makes a firm clamp of both ends. The rotation of the clamping lever is perpendicular to the direction of rotation of the hub. The disadvantage is the need to precisely turn the helix of the pin so that the lever fits exactly on the fork after tightening, which may not always work the first time. Improperly tightened lever can form a side outlet outside the wheel profile, which could lead to accidental contact with, for example, vegetation and release of the hub from the clamp. In addition, despite the presence of a short lever, a force may be needed to effectively tighten it over the power of, for example, weaker individuals.

A similar clamping mechanism is described in document DE 19513764, where one side of the inner pin is provided with a thread for screwing into a threaded fork and the other side is provided with a cone which is pushed into the conical hole of the other side of the fork by means of a lever mechanism. The disadvantages are similar to the previous solution, i.e. the need for precise turn of the pin in the opposite thread so that after tightening the lever fits exactly on the fork.

The second type of wheel hub solution, i.e. a wheel hub with a fixed sleeve or with a side guide, is described in document CZ 46919, where the through shaft is the supporting element.

A stationary part of the wheel hub with a bearing path is mounted on the shaft and fastened with a side screw. The side carrier forming the central rotating element of the wheel hub moves along the bearing path. The disadvantage of this solution is the need for relatively slow disassembly of the screw, and the need to use tools, i.e. spanners.

Document US 5957544 describes a mechanism for removable anchoring of a wheel hub with a side guide. This use is suitable, for example, for prams, carts and other technical devices, where the axis is mounted so that the wheel is fitted with a hub at its end, the shaft shoulder not being part of this hub. This mechanism allows easy and quick fitting and removal of the wheel even with the hub from the shaft. However, the disadvantage is the low strength of the connection, which makes this hub unsuitable for carrying a larger load in the order of over 20 kg and also for the possible use of motor drives. In particular, the locking elements used are not sufficiently resistant to deformation and breakage, especially under the action of greater lateral forces. As a result, when the cart is loaded with a person's weight, there is a risk of deformation of the wheel locking elements during driving in crisis situations. Document

EP0697300 discloses a clamping element including all the technical features of the preamble of claim 1.

The objective of the present invention is to provide a clamping element design which allows the element to be easily and quickly mounted on the shaft and the wheel with the hub to be easily removed from the shaft, without the need for great physical force, skill or tools. The invention must meet the high safety of the fitting so that there is not risk of its release from the fitting. Furthermore, the invention must also provide the possibility of use in the case of the assembly of electric drives.

### Summary of the Invention

The shortcomings of the currently known technical solutions are overcome by the proposed clamping element combining a wheel hub and a shaft sleeve adapted accordingly, enabling simple mounting of the wheel hub on a shaft with a shaft sleeve. Removing a wheel hub is easy and requires no great physical force, skill, even less other jigs or tools. The clamping element meets the high safety of the fitting so that there is no risk of the wheel hub coming loose from the fitting. Furthermore, the clamping element offers the possibility of use in the case of the assembly of electric drives of the wheels.

The clamping element for quick clamping of the wheel hub to the shaft consists of a wheel hub which is fitted in the wheel rim or disc and of a shaft sleeve which is mounted on the shaft. To realize the fitting and interconnection of the sleeve and the hub, the shaft sleeve is provided with a locking groove and the wheel hub is provided with at least two pawls. The pawls are pivotally arranged in the hub body, and this arrangement allows roll movement between their two extreme positions. The wheel hub is further provided with a control mechanism for controlling the movement of the pawls between the extreme positions. The mechanism for moving the pawls consists in that each pawl in the hub clamping position engages with its locking tooth in the locking groove of the shaft sleeve and in the hub release position the locking tooth of the pawl is pushed out of the locking groove.

Each pawl is formed in the shape of an "L" letter with two arms.

The anchor arm is terminated at its free end by a locking tooth. The control arm, the free end of which faces the centre of the wheel hub, engages with the control mechanism. At the point of contact of the anchor arm and the control arm, the pawl is mounted in a semicircular groove formed in the body of the wheel hub.

In another preferred embodiment, each pawl has a semicircular projection at the point of contact of the anchor arm and the control arm. This projection is complementary to the semicircular groove and the pawl is placed in this semicircular groove by this projection.

In another preferred embodiment, the control mechanism comprises an axially sliding shank arranged in a circular hole of the hub body. The position of the shank corresponds to the mounting in the axis of the wheel hub. This shank is provided with a circular guide groove at its one end into which the ends of the control arms of the pawls fit. At its other end, the shank is provided with a through hole.

In the following preferred embodiment, the control mechanism further comprises a lever and a lever rod. The lever rod in question is hinged in the body of the wheel hub at one end. At its other end, the lever rod is swivel-type connected to the lever by means of a connecting pin. The lever rod is arranged so that at least one of its parts always passes through the through hole of the sliding shank.

In another preferred embodiment, the lever is L-shaped with one shorter and one longer arms. The shorter arm of the lever is swivel-type connected to the rod by means of a connecting pin and its free end is provided with a shoulder. This shoulder slides on a sliding surface which is formed in the body of the hub.

In another preferred embodiment, the common bearing surfaces of the wheel hub and the shaft sleeve are formed into a cone, thus producing a fast and precise positioning of the hub on the shaft sleeve.

The main advantage of the present invention is that by implementing the shaft sleeve as one part of the clamping element on the shaft of the pram or cart and the hub on the wheel rim or disc, a device is obtained allowing easy and fast removal of the wheel with the hub from the shaft. All this without the need for great physical force, skill, additional tools or special jigs. At the same time, the invention meets the high safety of the fitting and there is no risk of spontaneous release of the hub from the sleeve. The invention also provides a sufficient load-bearing capacity of the clamping element and at the same time is suitable for use on manually driven prams and carts, but also those with an electric drive.

### Explanation of drawings

The invention will be explained in detail by drawings which illustrate:
- Fig. 1: a sectional side view of the clamping element in the open state separating the wheel hub from the shaft sleeve;
- Fig. 2: a sectional side view of the clamping element in the clamped state connecting the wheel hub and the shaft sleeve;
- Fig. 3: a perspective view of the clamping element in the clamped state;
- Fig. 4: a perspective view of the clamping element in the clamped state without the body of the wheel hub;
- Fig. 5: a front view of fitting the wheel hub to the wheel;
- Fig. 6: a perspective view of the wheel clamping element in the open state without the body of the wheel hub after separating the wheel hub from the shaft sleeve;
- Fig. 7: a perspective view of the wheel clamping element in the open state with the body of the wheel hub after separating the wheel hub from the shaft sleeve;

### Examples of the invention embodiments

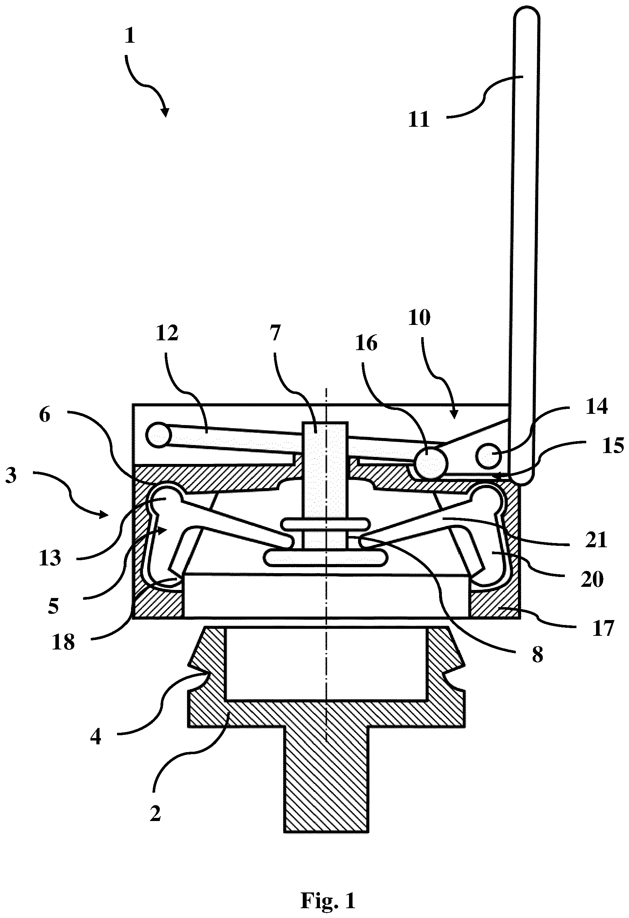

As shown in Figures 1, 2, 3 and 7, the clamping jig **1** is formed by two basic parts, i.e. the hub **3** of the wheel **19** and the shaft sleeve **2.** In combination, these two parts allow a simple mounting of the hub **3** of the wheel **19** on the shaft provided with the shaft sleeve **2** in question. The construction material of the hub **3** and the shaft sleeve **2** can be metal, preferably expanded, such as aluminium, but also other metals, plastics or combinations of metals and plastics or several metals.

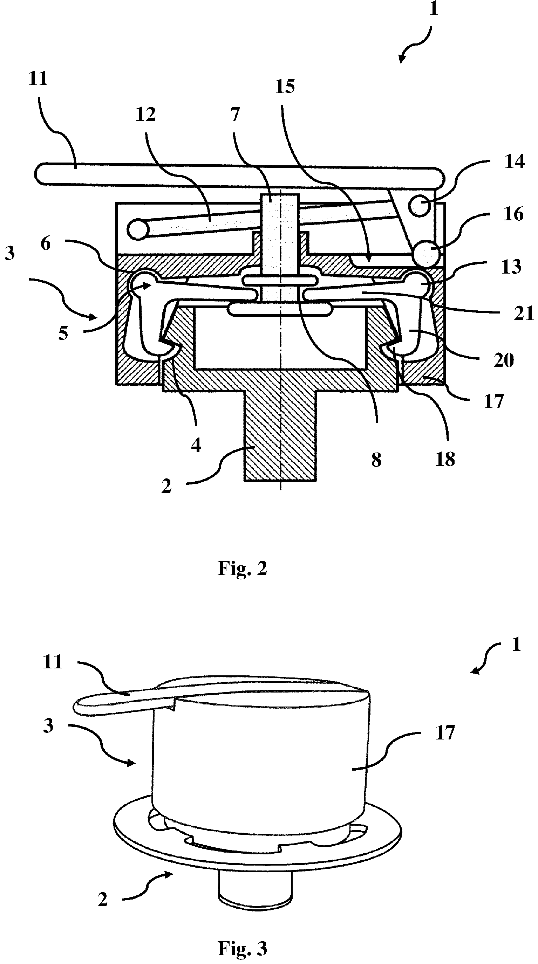

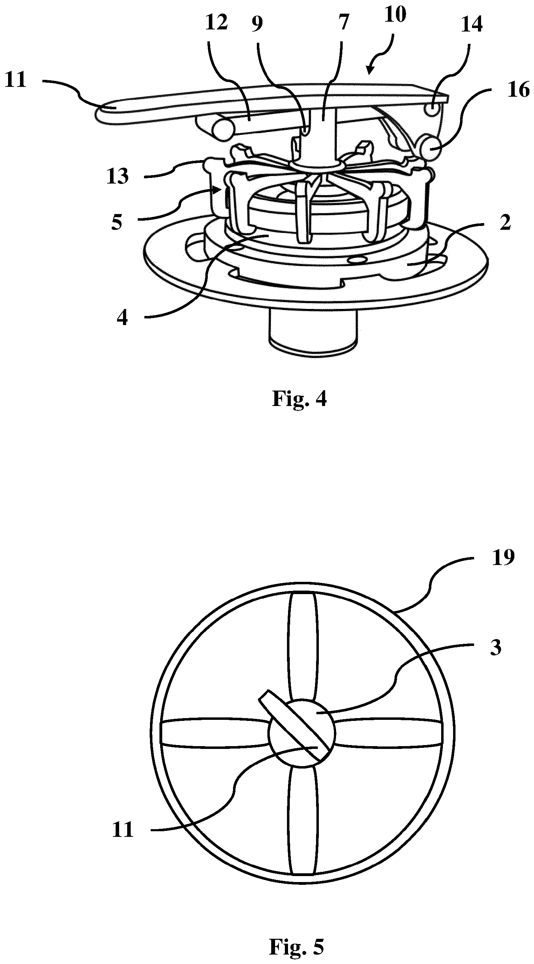

As shown in Fig. 5, the hub **3** of the wheel **19** is centrally mounted and fixed in the rim or disc of the wheel **19.** According to some embodiments of the invention, the anchoring of the hub **3** can be made by means of wheel spokes, casting into a single element formed by a rim, the hub **3** and connecting spokes, or by another method well known to the person skilled in the field by fitting the hubs **3** in the wheels **19**. As shown in Fig. 3, the hub **3** has a cylindrical body **17** with a lateral overlap formed by a projecting lever **11.**

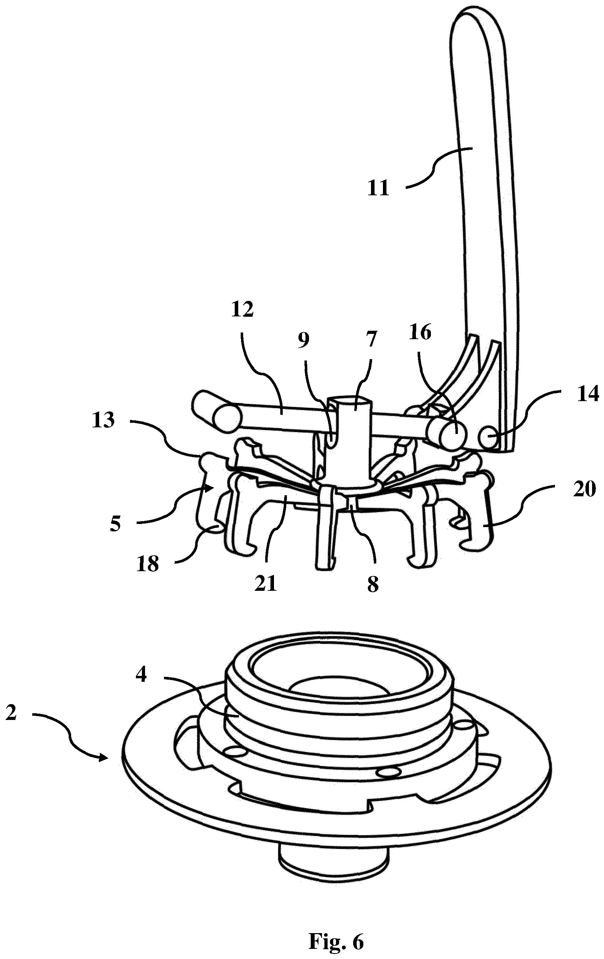

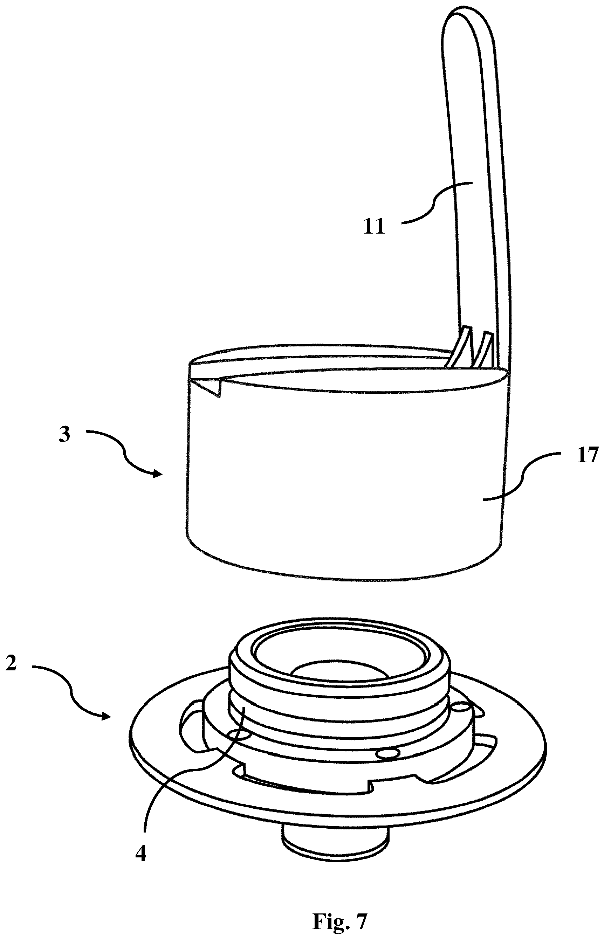

As shown in Figs. 6 and 7, the shaft sleeve **2** is provided with a cavity used to anchor the shaft sleeve **2** to the shaft. To realize the interconnection of the shaft sleeve **2** and the hub **3,** according to Figs. 1, 2, 4, 6 and 7, the shaft sleeve **2** is provided with a locking groove **4** and, according to Figs. 1, 2, 4 and 6, the hub **3** of the wheel **19** is provided with at least two pawls **5.** As shown in Figs. 1 and 2, the pawls **5** are pivotally arranged in the body **17** of the hub **3.** This arrangement allows roll movement of the pawls **5** between their two extreme positions. As shown in Figs. 1 and 3, the hub **3** of the wheel **19** is further provided with a control mechanism **10** for controlling the movement of the pawls **5** between the extreme positions. The mechanism for moving the pawls **5** consists in that each pawl **5** in the hub **3** clamping position engages with its locking tooth **18** in the locking groove **4** of the shaft sleeve **2** and in the hub **3** release position the locking tooth **18** of the pawl **5** is pushed out of the locking groove **4.** Due to the need to allow connection at any position of rotation of the wheel **19,** the locking groove **4** is formed as a circular groove along the entire circumference of the shaft sleeve **2** and the inner profile of the locking groove **4** corresponds to the profile of the locking tooth **18**.

As shown in Figs. 1, 2 and 6, each pawl **5** is formed in the shape of an "L" letter with two arms **20, 21.** The anchor arm **20** is terminated at its free end by a locking tooth **18.** The control arm **21**, the free end of which faces the centre of the hub **3** of the wheel **19,** engages with the control mechanism **10.** At the point of contact of the anchor arm **20** and the control arm **21,** the pawl **5** is mounted in a semicircular groove **6** formed in the body **17** of the hub **3** of the wheel **19.** In this exemplary embodiment of the invention, a semicircular projection **13** is formed on the pawl **5** at the point of contact of the anchor arm **20** and the control arm **21.** This semicircular projection **13** is complementary to the semicircular groove **6** and the pawl **5** is placed in this semicircular groove **6** by this semicircular projection **13.**

The control mechanism **10** comprises an axially sliding shank **7** arranged in a circular hole of the body **17** of the hub **3.** The position of the sliding shank **7** corresponds to the mounting in the axis of the hub **3** of the wheel **19.** This sliding shank **7** is provided with a circular guide groove **8** at its one end into which the ends of the control arms **21** of the pawls **5** fit. At its other end, the sliding shank **7** is provided with a through hole **9.** According to one exemplary embodiment of the invention, the sliding shank **7** is cylindrical in shape and the guide groove **8** is formed as a gap delimited by a pair of circumferential rings in the lower part of the sliding shank **7**. According to this exemplary embodiment of the invention, the through hole **9** is oval in shape and is arranged in the upper part of the sliding shank **7**. This shape allows the moving rod **12** to move in a biaxial system in the vertical plane of projection of the x- and y-axes of the orthogonal coordinate system.

According to the same embodiment of the invention shown in Figs. 1 and 2, the control mechanism **10** is further formed by a lever **11** and a rod **12.** The rod **12** in question is hinged in the body **17** of the hub **3** of the wheel **19** at one end. At its other end, the rod **12** is swivel-type connected to the lever **11** by means of a connecting pin **14.** The rod **12** is arranged so that at least one of its parts always passes through the through hole **9** of the sliding shank **7**.

According to the same embodiment of the invention shown in Figs. 1 and 2, the lever **11** is formed in the shape of an "L" letter with one shorter and one longer arms. The shorter arm of the lever **11** is swivel-type connected to the rod **12** by means of a connecting pin **14** and its free end is provided with a shoulder **16.** This shoulder **16** slides on a sliding surface **15** which is formed in the body **17** of the hub **3** as a recess.

From mechanical point of view, the pawl **5** forms, in cross-section, the profile of the half-anchor, where the hook end is replaced by a locking tooth **18.** When using at least two pawls **5,** located separately or, in a non-illustrated exemplary embodiment, in the form of a connected ring along the circumference of the locking groove **4,** the control arm **21** is moved upwards and the pawl **5** is tilted by the anchor arm **20** with the locking tooth **18** out of the body **17** of the hub **3** when the sliding shank **7** is lifted and the pawls **5** thus acquire the function of the jaw clamps clamping the shaft sleeve **2.**

The sliding movement of the sliding shank **7** is ensured by tilting the lever **11.** Tilting of the lever **11** causes a sliding movement of the rod **12** in the direction perpendicular to the axis of the wheel **19** and at the same time a lifting movement in the direction of the axis of the wheel **19.** As the rod **12** passes through the through hole **2** of the sliding shank **7**, its lifting then simultaneously lifts the entire sliding shank **7**.

In order to prevent the pawls **5** from being released spontaneously from the clamp, the lever **11** is anchored in its lower extreme tilted position in the body **17** of the hub **3** of the wheel **19.** Release of the clamp and removal of the hub **3** from the shaft sleeve **2** is made by the opposite movement of the lever **11** to its upper extreme position.

The anchoring of the shaft sleeve **2** to the shaft can be made in a detachable or non-detachable manner, by means of screws, by means of a respective clamping shape of the shaft and the inner cavity of the shaft sleeve **2,** by gluing or other method well known to the person skilled in the field for firm connection of circular components.

According to one exemplary embodiment of the invention shown in Figs. 1 and 2, the basic assembly of the hub **3** of the wheel **19** and the shaft sleeve **2** is ensured by the interlocking conical shape of the bearing surfaces of these elements, i.e. the conical surface of the hub **3** and the conical cavity of the shaft sleeve **2.** In this exemplary embodiment of the invention, the pawls **5** and the locking groove **4** form only a retaining mechanism securing the connection of the hub **3** and the shaft sleeve **2.**

According to other non-illustrated exemplary embodiments of the invention, the body **17** of the hub **3** of the wheel **19** and the shaft sleeve **2** can comprise various functional recesses aimed at reducing the mass and thus the weight or the resulting centrifugal force of the rotating clamping element **1** while maintaining the strength and safety parameters of the invention.

### Industrial applicability

The wheel clamping element designed for quick clamping of the wheel hub to the shaft or wheel axis finds industrial application mainly in the construction of non-motorized and low-speed motor carts, prams and other similar transport and transportation equipment.

### List of index reference numerals

- 1: clamping element
- 2: shaft sleeve
- 3: wheel hub
- 4: locking groove
- 5: pawl
- 6: semicircular groove
- 7: sliding shank
- 8: guide groove of the sliding shank
- 9: through hole of the sliding shank
- 10: control mechanism
- 11: lever
- 12: lever rod
- 13: semicircular projection
- 14: connecting pin
- 15: sliding surface
- 16: lever shoulder
- 17: body of the wheel hub
- 18: locking tooth
- 19: wheel
- 20: pawl anchor arm
- 21: pawl control arm

## Claims

1. Clamping element (1) for quick clamping of a hub (3) of a wheel (19) to a shaft **,**the clamping element comprising a shaft sleeve (2), which is provided with a locking groove (4) , and the hub (3) of the wheel (19)**,** which is provided with at least two pawls (5) pivotally arranged in a body (17) of the hub (3) with the possibility of moving the pawls (5) between two extreme positions, and further the hub (3) of the wheel (19) is provided with a control mechanism (10) for controlling the movement of the pawls (5) between these extreme positions, each pawl (5) in the hub (3) clamping position engaging with its locking tooth (18) in the locking groove (4) of the shaft sleeve (2) and in the hub (3) release position the locking tooth (18) of the pawl (5) is pushed out of the locking groove (4), **characterized in that** each pawl (5) is formed in the shape of an "L" letter and consists of an anchor arm (20) with the locking tooth (18) and a control arm (21), the free end of which faces the centre of the hub (3) of the wheel (19) and engages with the control mechanism (10), while the pawl (5) being mounted in a semicircular groove (6) at the point of contact of the anchor arm (20) and the control arm (21).

2. Clamping element according to claim 1, **characterized in that** each pawl (5) has a semicircular projection (22) formed at the point of contact of the anchor arm (20) and the control arm (21), complementary to the semicircular groove (6) in the body (17) of the hub (3).

3. Clamping element according to claim 1, **characterized in that** the control mechanism (10) comprises an axially sliding shank (7), this shank (7) being arranged in a circular hole of the body (17) of the hub (3) in the axis of the hub (3) of the wheel (19), and further this shank (7) is provided with a circular guide groove (8) at its one end into which the ends of the control arms (21) of the pawls (5) fit and at its other end the shank (7) is provided with a through hole (9).

4. Clamping element according to claim 3, **characterized in that the** control mechanism (10) further comprises a lever (11) and a rod (12) of the lever (11), one end of the rod (12) of the lever (11) being hinged in the body (17) of the hub (3) and the other end of the rod (12) of the lever (11) being swivel-type connected to the lever (11) by means of a connecting pin (14), with the rod (12) of the lever (11) passing through the through hole (9) of the sliding shank (7).

5. Clamping element according to claim 4, **characterized in that** the lever (11) is L-shaped, the shorter arm of the lever (11) being swivel-type connected to the rod (12) by means of a connecting pin (14), and the free end of the shorter arm of the lever (11) is provided with a shoulder (16) sliding along a sliding surface (1 5) formed in the body (17) of the hub (3).

6. Clamping element according to any of claims 1 to 5, **characterized in that** the surface of the hub (3) and the cavity of the shaft sleeve (2) are arranged at the point of mutual contact as interlocking conical surfaces, for faster and more precise assembly of these elements.

## Patentansprüche

1. Spannelement (1) zum Schnellspannen einer Nabe (3) eines Rades (19) auf einer Welle, wobei das Spannelement eine Wellenhülse (2) umfasst, die mit einer Sperrnut (4) versehen ist, und die Nabe (3) des Rades (19) mit mindestens zwei Sperrklinken (5) versehen ist, die schwenkbar in einem Körper (17) der Nabe (3) angeordnet sind, mit der Möglichkeit, die Sperrklinken (5) zwischen zwei Extrempositionen zu bewegen, und ferner die Nabe (3) des Rades (19) mit einem Steuermechanismus (10) zur Steuerung der Bewegung der Sperrklinken (5) zwischen diesen Extremstellungen ausgestattet ist, wobei jede Sperrklinke (5) in der Nabenspannstellung mit ihrem Sperrzahn (18) in die Sperrnut (4) der Wellenhülse (2) eingreift und in der Nabenfreigabestellung der Sperrzahn (18) der Sperrklinke (5) aus der Sperrnut (4) herausgedrückt wird, **dadurch gekennzeichnet, dass** jede Sperrklinke (5) in Form des Buchstabens "L" ausgebildet ist und aus einem Ankerarm (20) mit den Sperrzahn (18) und einem Steuerarm (21) besteht, dessen freies Ende der Mitte der Nabe (3) des Rades (19) zugewandt ist und in den Steuermechanismus (10) eingreift, während die Sperrklinke (5) in einer halbkreisförmigen Nut (6) am Berührungspunkt des Ankerarms (20) und des Steuerarms (21) gelagert ist.

2. Spannelement nach Anspruch 1, **dadurch gekennzeichnet, dass** jede Sperrklinke (5) einen halbkreisförmigen Vorsprung (22) aufweist, der an der Berührungsstelle des Ankerarms (20) und des Steuerarms (21) komplementär zur halbkreisförmigen Nut (6) im Körper (17) der Nabe (3) ausgebildet ist.

3. Spannelement nach Anspruch 1, **dadurch gekennzeichnet, dass** der Steuermechanismus (10) einen axial verschiebbaren Schaft (7) umfasst, wobei dieser Schaft (7) in einer kreisförmigen Bohrung des Körpers (17) der Nabe (3) in der Achse der Nabe (3) des Rades (19) angeordnet ist, und ferner dieser Schaft (7) an seinem einen Ende mit einer kreisförmigen Führungsnut (8) versehen ist, in die die Enden der Steuerarme (21) der Sperrklinken (5) passen, und der Schaft (7) an seinem anderen Ende mit einer Durchgangsbohrung (9) versehen ist.

4. Spannelement nach Anspruch 3, **dadurch gekennzeichnet, dass** der Steuermechanismus (10) ferner einen Hebel (11) und eine Stange (12) des Hebels (11) umfasst, wobei ein Ende der Stange (12) des Hebels (11) im Körper (17) der Nabe (3) angelenkt ist und das andere Ende der Stange (12) des Hebels (11) mittels eines Verbindungsbolzens (14) schwenkbar mit dem Hebel (11) verbunden ist, wobei die Stange (12) des Hebels (11) die Durchgangsbohrung (9) des Gleitschafts (7) durchquert.

5. Spannelement nach Anspruch 4, **dadurch gekennzeichnet, dass** der Hebel (11) L-förmig ausgebildet ist, wobei der kürzere Arm des Hebels (11) mittels eines Verbindungsbolzens (14) schwenkbar mit der Stange (12) verbunden ist und das freie Ende des kürzeren Arms des Hebels (11) mit einer Schulter (16) versehen ist, die entlang einer im Körper (17) der Nabe (3) ausgebildeten Gleitfläche (15) gleitet.

6. Spannelement nach einem der Ansprüche 1 bis 5, **dadurch gekennzeichnet, dass** die Oberfläche der Nabe (3) und der Hohlraum der Wellenhülse (2) an der Stelle der gegenseitigen Berührung als formschlüssige Konusflächen angeordnet sind, um eine schnellere und genauere Montage dieser Elemente zu ermöglichen.

## Revendications

1. Élément de serrage (1) pour un serrage rapide d'un moyeu (3) d'une roue (19) sur un arbre, l'élément de serrage comprenant un manchon (2) d'arbre qui est pourvu d'une rainure (4) de verrouillage et un moyeu (3) de la roue (19) qui est pourvu d'au moins deux cliquets (5) montés de manière pivotante dans le corps (17) du moyeu (3) avec la possibilité de déplacer les cliquets (5) entre deux positions extrêmes, et en outre, le moyeu (3) de la roue (19) est pourvu d'un mécanisme (10) de commande pour commander le déplacement des cliquets (5) entre ces positions extrêmes, chaque cliquet (5) dans sa position de serrage dans le moyeu (3) engageant la dent (18) de verrouillage dans la rainure (4) de verrouillage du manchon (2) d'arbre et dans sa position de déverrouillage dans le moyeu (3), la dent (18) de verrouillage du cliquet (5) est poussée hors de la rainure (4) de verrouillage, **caractérisé en ce que** chaque cliquet (5) a la forme de la lettre « L » et est constitué d'un bras (20) d'ancrage avec la dent (18) de verrouillage et un bras (21) de commande, dont l'extrémité libre fait face au centre du moyeu (3) de la roue (19) et engrène avec le mécanisme (10) de commande, tandis que le cliquet (5) est monté dans une rainure (6) semi-circulaire au niveau de contact du bras (20) d'ancrage et du bras (21) de commande.

2. Élément de serrage (1) selon la revendication 1, **caractérisé en ce que** chaque cliquet (5) présente une saillie (22) semi-circulaire formée au niveau de contact du bras (20) d'ancrage et du bras (21) de commande complémentaire de la rainure (6) semi-circulaire dans le corps (17) du moyeu (3).

3. Élément de serrage (1) selon la revendication 1, **caractérisé en ce que** le mécanisme (10) de commande comprend une tige (7) coulissante axialement, cette tige (7) étant disposée dans un trou circulaire du corps (17) du moyeu (3) dans l'axe du moyeu (3) de la roue (19), et en outre, cette tige (7), à son extrémité, est pourvue d'une rainure (8) de guidage circulaire dans laquelle les extrémités des bras (21) de commande des cliquets (5) s'engagent, et à son autre extrémité, la tige (7) est pourvue d'un trou (9) traversant.

4. Élément de serrage (1) selon la revendication 3, **caractérisé en ce que** le mécanisme (10) de commande comprend en outre un levier (11) et une tige (12) du levier (11), une extrémité de la tige (12) du levier (11) étant articulée dans le corps (17) du moyeu (3) et l'autre extrémité de la tige (12) du levier (11) étant reliée de manière pivotante au levier (11) au moyen d'une broche (14) de raccordement, la tige (12) du levier (11) passant par le trou (9) traversant de la tige (7) coulissante.

5. Élément de serrage (1) selon la revendication 4, **caractérisé en ce que** le levier (11) est en forme de L, le bras le plus court du levier (11) étant relié de manière pivotante à la tige (12) au moyen d'une broche (14) de raccordement et l'extrémité libre du bras le plus court du levier (11) est pourvue d'un épaulement (16) coulissant le long d'une surface (15) de glissement formé dans le corps (17) du moyeu (3).

6. Élément de serrage (1) selon l'une quelconque des revendications 1 à 5, **caractérisé en ce que** la surface du moyeu (3) et la cavité du manchon (2) d'arbre sont agencées au niveau de contact mutuel sous forme de surfaces coniques emboîtables pour un assemblage plus rapide et plus précis de ces éléments.
